# EUROPEAN PATENT SPECIFICATION

(11) **EP 0 500 004 B1**
(45) Date of publication and mention of the grant of the patent: **10.01.1996**
(21) Application number: 92102584.7
(22) Date of filing: 17.02.1992
(51) Int. Cl.: B65F 3/20, B29B 17/02, B65F 3/00, B65F 3/14

(54) **Method and apparatus for reclaiming reusable waste material from discarded containers or the like made from reusable plastics material**
Verfahren und Vorrichtung zur Rückgewinnung von wiederverwertbarem Abfall von Behältern oder dergleichen aus wiederverwertbarem Kunststoff
Procédé et dispositif pour la récupèration de déchêts réutilisables de conteneurs ou similaires en matière plastique

(30) Priority: 22.02.1991 IT AL910002
(43) Date of publication of application: 26.08.1992
(73) Proprietor: TECNOVA s.r.l., I-09047 Selargius (IT)
(72) Inventor: Meloni, Gianfranco, I-09047 Selargius (IT)
(74) Representative: Porsia, Bruno

(56) References cited:
- EP-A- 0 220 936
- EP-A- 0 364 835
- EP-A- 0 407 679
- WO-A-90/11952
- AU-B- 534 596
- FR-A- 2 662 389
- GB-A- 2 041 776

## Description

The invention relates to a method of reclaiming discarded containers made from reusable plastics material, according to the pre-characterizing part of claim 1, and to an apparatus for carrying out the method and corresponding to the pre-characterizing part of claim 3.

A method and an apparatus of this kind are known from the document EP-A-0407679 which provides a pell-mell transportation of the solide refuse.

Moreover various methods of getting rid of refuse have been proposed, which are such that a sorted reclaiming of any reusable waste material is provided. Particularly falling within this sphere generally are the discarded containers of reusable plastics material, whose quantity in the refuse mass recently grew considerably higher, and which basically are the subject of the new techniques of collecting and reclaiming sorted-out refuse, owing to their not biodegradable but mostly reusable properties, as well as to their peculiarity of globally affecting the refuse mass as a whole by a great increase of the refuse volume, however by a little addition to the weight of the refuse mass.

A technique of collecting sorted-out refuse, that according to E.E.C. regulations shall be put into effect before long, provides for the main places where goods packaged in plastics material containers or the like are sold, such as hypermarkets, supermarkets, trade centers, or the like, to also function as places for collecting the discarded containers of reusable plastics material, by the provision of devices in which the said containers, or the like, will be collected, and the plastics material of the discarded containers will be ground or triturated, the customers being stimulated to bring back the emptied plastics material containers or vessels by the payment of some caution money thereon, at the time of buying goods packaged in the said containers.

The presently suggested method, while ideally solving the problem of sorting the discarded, reusable plastics material items, particularly vessels and containers, out of the rest of refuse, however has many drawbacks. Owing to the complex construction and rather high cost of the devices for grinding or triturating the plastics material of discarded items, the said devices might be located only in big trade centers. Thus public and private places for collecting sorted out refuse would be excluded from any waste material reuse, so that discarded plastics material items being only subjected to an insufficient rough compaction, would be removed therefrom in a pell-mell condition. On the other hand, the trade centers provided with the said devices for grinding or triturating the plastics material of discarded items, would have to face the managing of a great number of such devices, which managing would appear deceptively easy and with no problem only to an unskilled person, so that there is always the risk of having a high percentage of out-of-service grinding or triturating devices.

The object of the present invention is to provide a method and an apparatus of the type as disclosed at the outset for managing a sorted out disposal of refuse, particularly of waste material of a municipality, in an extremely economic practical and quick manner, so that the refuse disposal service will be improved and rationalized and the cost of the materials to be reused will be also abated.

Said object is achieved by a method according to the present invention characterized by the combination of features according to the characterizing part of claim 1. A preferred apparatus according to the invention for carrying out the method is characterized by the combination of features according to the characterizing part of claim 3.

From the economic and practical standpoint, the invention affords remarkable advantages which, on the one hand, are connected to a saving in the expenditure for buying the required machinery and which, on the other hand, result from the inherent properties of the plastics material of discarded containers. In fact, according to the known methods, the conventionally used means of transport are utilized only for about 1% to 2% of their carrying capacity, owing to the big volume of discarded containers made from reusable plastics material, and the little weight thereof. An articulated four-axle truck having a volumetric capacity of 30 cubic meters, actually has on the average a carrying capacity of about ten-thousand 1.5 litre plastics bottles, with the overall weight thereof being approximately of 420 kgs. only.

By the novel method according to the invention, owing to the reusable plastics material of discarded containers, or the like, being ground or triturated, the function of transporting the discarded plastics material containers, or the like, which was formerly performed by 4 to 8 big trucks, can be now performed by a small vehicle, such as a van or a small truck. In a town in which about 300.000 persons live, the collecting of reusable plastics material from solid refuse can be handled on the average by 4 vans or 4 trucks of the type according to the invention, on which are loaded discarded plastics material containers, or the like, removed from all of the sorted refuse-discarding stations provided at big and small, public and private places for collecting sorted-out waste material.

Some embodiments of the apparatus for carrying out the method, according to the invention, will be disclosed by way of non-limiting examples in the following description, reference being had to the accompanying drawings, in which:
Figure 1 is a side elevational view showing a truck for transporting discarded containers, or the like, made from reusable plastics material.
Figure 2 is a top view of the truck according to Figure 1.
Figures 3 and 4 are side views respectively showing a modified embodiment of the truck according to Figures 1 and 2.

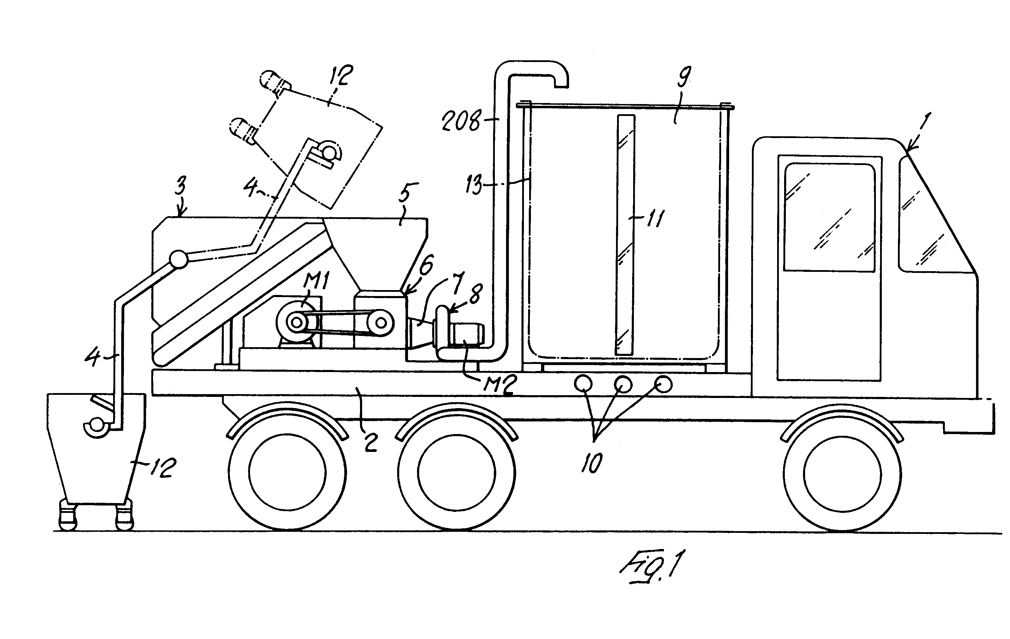

A medium-sized truck 1 having a medium carrying capacity in weight, is provided with a carrying plane 2. Provided at the rear end of the carrying plane 2, is a device 3 for loading on truck 1 discarded containers, or the like, made from reusable plastics material, which consists of means for gripping and emptying the bins 12 into which these containers, or the like, have been discarded. The discarded container-loading device 3 is provided with bin-gripping arms 4 protruding from the rear end side of the carrying plane 2 of truck 1, and being swingable about a horizontal shaft arranged parallel to the rear end side of the said carrying plane 2. The swingable bin-gripping arms 4 have their free ends provided with openable and closable gripper members 104 for engaging the studs 112 projecting from a container-discarding bin 12. The container-discarding bins 12 are overturned, as shown by dash-and-dot lines in Figure 1, and emptied into a hopper 5 placed over and feeding the discarded containers, or the like, to a successive device 6 for grinding or triturating the reusable plastics material of which the discarded containers or the like, are made. The outlet 7 of the plastics material grinding or triturating device 6 opens into means 8 for conveying the ground or triturated plastics material into a storage bin 9 provided with closable delivery ducts 10. The means 8 for conveying the ground or triturated plastics material may be of any suitable type. According to the example shown in Figure 1, these means consist of a pump, with the pump intake being connected to the outlet 7 of the plastics material grinding or triturating device 6, and with the pump delivery being connected through an upstanding delivery pipe 208 to the top end of the storage bin 9. The storage bin 9 may be provided with an inspection opening 11 closed by a transparent material, for checking the level at which the storage bin has been filled.

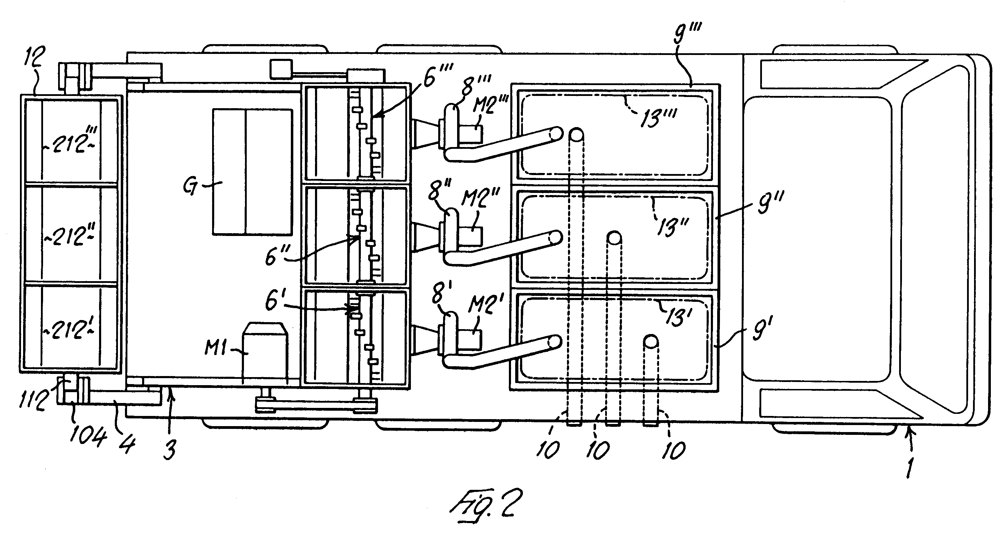

The discarded container-loading device 3, the plastics material grinding or triturating device 6 and the ground or triturated plastics material conveying means 8 may be each operated through a respective, suitable power take-off by the engine of truck 1 or, as shown in Figure 1, by their own driving means, such as electric motors M1, M2, which may be fed from an electric current generator G (Figure 2).

According to a further improvement in the apparatus for processing reusable plastics material of discarded containers, or the like, the processing of said plastics material may be carried out separately for each kind of plastics material, such as PVC, PET, CC, so that a homogeneous collecting of each kind of plastics material will be effected with a high reclaiming degree. In this case, the container-discarding bins 12 are formed with compartments 212', 212'', 212''' set in line with three separate plastics material grinding or triturating devices, respectively designated by reference numerals 6', 6'', and 6''', which are arranged in a mutually parallel relation, as shown in Figure 2. Each plastics material grinding or triturating device 6', 6'', 6''' is provided with its own discarded container-feeding hopper, and is connected through separate, ground or triturated plastics material conveying means 8', 8'', 8''' fitted each with their own driving unit M2', M2'', M2''', to a separate storage bin 9', 9'', 9''' for the ground or triturated plastics material, the plastics material grinding or triturating devices 6', 6'', 6''' being advantageously operated by only one common motor M1.

According to a not shown modified embodiment, any suitable device for packaging any ground or triturated plastics materials, such as a device for bagging the same, can be provided in place of the storage bins 9', 9'', 9'''. This device is diagrammatically shown in Figures 1 and 2, and is in form of bags 13, 13', 13'', 13''', which are represented by dash-and-dot lines, and are supported at the interior of the storage bins 9, 9', 9'', 9'''.

The discarded containers of reusable plastics material removed from the container-discarding bins provided in the several sorted refuse-discarding stations, can be ground or triturated just while being transported, during the routes from one station to the other from which these containers are withdrawn, and while being carried to storage places or to locations from which the ground or triturated plastics material will be forwarded to the plants using the same, or during their direct transportation to these plants, with a considerable saving of money. Thus, the plastics material reclaiming cost will be abated, and the reuse of plastics material will become more attractive and profitable.

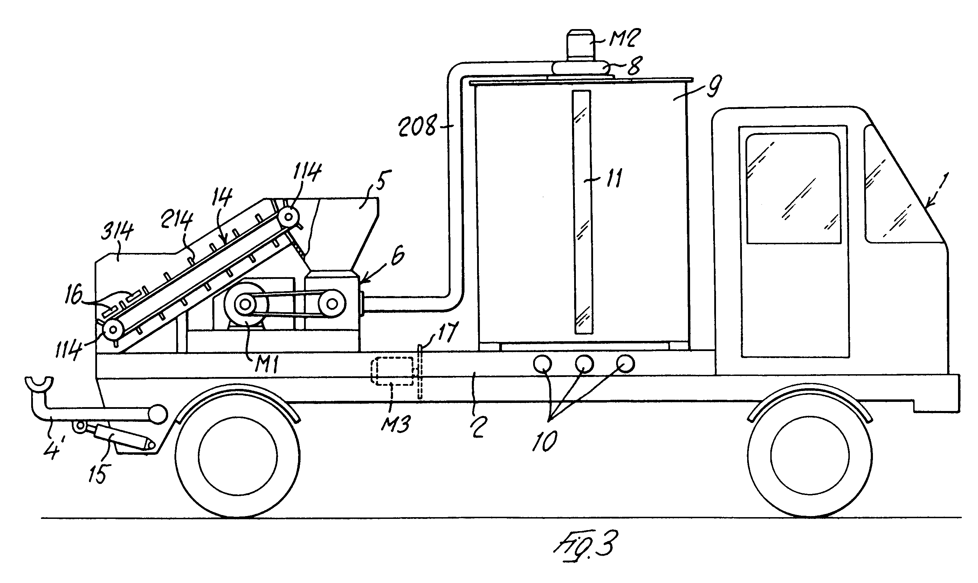

According to the modified embodiment shown in Figure 3, the discarded container-loading device 3 consists of means 14 for supplying the discarded containers made of reusable plastics material to be ground or triturated, to the hopper or hoppers 5 for feeding the plastics material grinding or triturating device or devices 6. The said discarded container-supplying means 14 may consist of one common conveyor belt, or may consist, for the embodiment according to Figure 2, of a plurality of conveyor belts arranged in a mutually parallel, side-by-side coplanar relation. In this latter instance, the conveyor belts 14 which may be of the endless belt type, are mutually separated by upstanding lateral partitions 314, and are led over motor-driven rollers 114. The conveyor belts 14 are fitted with a plurality of equispaced, transversely arranged blades 214, projecting perpendicularly therefrom by their outward side, and are located upstream of the plastics material grinding or triturating devices 6, the said conveyor belts being so inclined that the inlet rear end thereof lies at the level of the carrying plane 2 of truck 1, and their outlet fore end lies at the level of the top opening of the hopper or hoppers 5 for feeding the plastics material grinding or triturating device or devices 6. Two swingable arms 4' projecting from the rear end side of the carrying plane 2 of truck 1, and being each operated by a respective actuator 15, are advantageously provided for lifting a container-discarding bin 12. Thus, the container-discarding bins 12 can be lifted up to the level of, or over the conveyor belt inlet ends. In this modified embodiment, the means 8 for conveying the plastics material having been ground or triturated by the devices 6, to the bins 9 for storing the same, no more are in form of a pump as in the previously disclosed embodiment, but consist of suction means fixedly applied to the outward face of the top wall of the storage bins 9.

According to an improvement, a device 16, so-called "metal detector", is provided at the inlet end of each conveyor belt 14 for detecting any metallic items, and is diagrammatically shown in Figure 3. Thus, any metallic items that may have been unintentionally fed to a conveyor belt 14 can be immediately identified, so that it is possible to provide for their removal well before these items having reached, and may damage, the plastics material grinding or triturating devices 6.

According to a further feature, a saw 17, such as a disc saw, is incorporated in the carrying plane 2 of truck 1, and is operated by its own motor M3. By means of the saw 17 it is possible to cut into pieces of a small size the discarded big containers of reusable plastics material, having a capacity of, or higher than 50 litres, which can not be directly crushed down by the plastics material grinding or triturating devices 6.

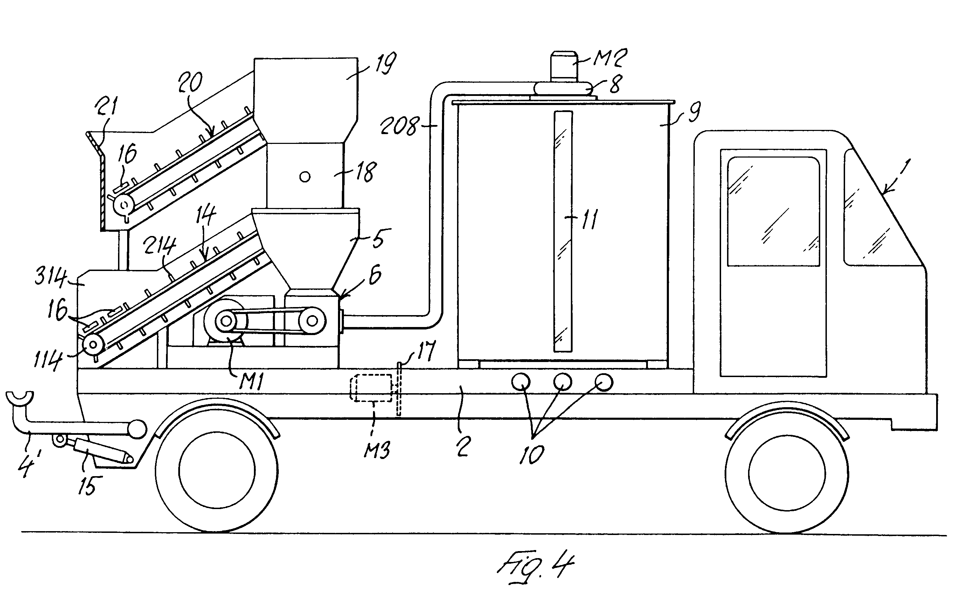

By the modified embodiment shown in Figure 4, an alternative way is suggested of previoulsy breaking into small pieces the discarded big containers of reusable plastics material. According to this modified embodiment, a further device 18 is provided atop of each hopper 5 feeding the respective plastics material grinding or triturating device 6, for breaking beforehand these discarded big containers into pieces of a small size, suitable for being processed by the underlying plastics material grinding or triturating devices 6. The outlet of these upper devices 18 directly opens into the respective hopper 5. The discarded big containers are fed to the upper devices 18 for breaking them into pieces of a small size, through an uppermost hopper 19 being supplied by conveyor belts 20, similarly as in the embodiment shown in Figure 3. These conveyor belts 20 are arranged at a higher level than, and at a distance from the conveyor belts 14 associated with the lower plastics material grinding or triturating devices 6, in a substantially parallel relation therewith. As shown in Figure 4, while the lower conveyor belts 14 are supplied from the rear end side thereof with discarded plastics material containers to be directly ground or triturated, the upper conveyor belts 20 are associared with a hopper 21 closed by a rear end wall, so that the discarded plastics material big containers to be broken beforehand into pieces of a small size, are delivered into the hopper 21 from the top opening thereof.

Of course, the plastics material grinding or triturating devices can be operated either with the vehicle being running or being stationary.

The plastics material grinding or triturating devices may be operated by any suitable motor, such as an internal combustion engine, an electric, hydraulic, oleodynamic motor, or the like, or by the engine of the running or stationary vehicle, through a suitable power take-off, such as a mechanical, hydraulic, electric, oleodynamic, or pneumatic drive, and with suitable means, such as a gearbox, or the like.

Of course the invention is not limited to the shown embodiments. The vehicles for transporting the discarded containers of reusable plastics material may be of any suitable type, and may be provided with different types of motors. The method and the apparatus for reclaiming the reusable plastics material of discarded containers may be applied with the required changes to the reclaiming of any other types of compatible reusable waste material, such as glass and aluminum.

## Claims

1. A method of reclaiming reusable waste material from discarded containers made from reusable plastics material, which are removed and carried away from each one of a plurality of successive, sorted refuse-discarding stations spread over the area of a municipality and are ground or triturated during the route to the next sorted refuse-discarding station and while the discarded containers are being conveyed to a storage place or while the same are being forwarded or transported to the final users of reclaimed plastics material, the discarded big containers made from reusable plastics material are previously cut or broken into pieces of a small size and are subsequently ground or triturated while being transferred or transported, so as to be pulverized or broken into very small pieces, characterized in that
- the discarded containers made from various kind of reusable plastics material are sorted out according to the kind of plastics material from which they are made, just when being discarded in the stations from which they are removed, or only when being carried away therefrom, the grinding or trituration of the plastics material of discarded containers being effected separately for each kind of plastics material,
- the plastics materials of discarded containers ground or triturated while being transferred or transported, are stored separately, according to the kind of plastics material from which the containers are made.

2. The method according to claim 1, characterized in that the ground or triturated plastics materials being thus in a pulverized or crushed condition, are packaged while being transferred or transported, into sealed packages, such as into sealed bags.

3. An apparatus for carrying out the method according to claim 1, comprising a vehicle (1) fitted with devices (3,14) for loading thereon the discarded containers made from reusable plastics material, which are removed from the sorted-out refuse-discarding stations, and with devices (6) for grinding or triturating the plastics material of the discarded containers supplied from the discarded container loading devices (3,14), and which grinding or triturating devices (6) deliver the ground or triturated plastics material into intermediate storage bins (9), characterized in that
- a plurality of plastics material grinding or triturating devices (6',6'',6'''), intended for being each supplied with discarded containers made from only one kind of reusable plastics material, are arranged in a mutually parallel relation,
- the outlets (7',7'',7''') of the plastics material grinding or triturating devices (6',6'',6''') are connected to separate means (8',8'',8''') for conveying the respective various kinds of ground or triturated plastics material of discarded containers into associated separate bins (9',9'',9''') for an intermediate storage of the said plastics materials,
- the discarded container-loading devices (3) consist of a plurality of conveyor belts (14) arranged in a mutually parallel, side-by-side coplanar relation and associated each with one plastics material grinding or triturating device (6',6'',6'''), these conveyor belts (14) being mutually separated by upstanding longitudinal partitions (314),
- means (17,18) are provided on the vehicle (1) for previously cutting or breaking discarded big containers of re-usable plastics material into pieces of a small size which are delivered to the plastics material grinding or triturating devices (6',6'',6''').

4. The apparatus according to claim 3, characterized in that a device (18) for breaking up the discarded big containers of re-usable plastics material into pieces of a small size is arranged upstream of each device (6',6'',6''') for grinding or triturating the discarded containers plastics material, and is operated in series therewith.

5. The apparatus according to claim 4, characterized in that the device (18) for breaking up the discarded big containers of re-usable plastics material, and the respective device (6',6'',6''') for grinding or triturating the discarded containers plastics material, are simultaneously operated, and are separately and simultaneously supplied respectively from their own separate devices (20,14) for delivering these discarded containers thereinto.

6. The apparatus according to the claims 4 and 5, characterized in that the devices (18) for breaking up the discarded big containers of re-usable plastics material are arranged atop of hoppers (5) feeding the devices (6',6'',6''') for grinding or triturating the discarded containers plastics material, and the separate discarded container-delivering devices are in the form of conveyor belts (20,14) which are arranged in an overlying parallel relation, and are vertically spaced apart according to the difference in level between the upper inlet of the hoppers (19,5) respectively feeding the said breaking up devices (18) and the said grinding or triturating devices (6',6'',6''').

7. The apparatus according to any one of the preceding claims 4 to 6, characterized in that the devices (18) for breaking up the discarded big containers, and the devices (6',6'',6''') for grinding or triturating the plastics material of the discarded containers, may be operated either with the vehicle (1) being running or being stationary.

8. The apparatus according to claim 3, characterized in that in the carrying plane (2) of the vehicle (1) is incorporated a saw (17), preferably a disc saw, for cutting big containers of re-usable plastics material into pieces of a small size, said saw (17) being operated by its own motor (M3).

9. The apparatus according to claim 3, characterized in that the means (3) for loading on the vehicle (1) the discarded containers made from re-usable plastics material, are in form of devices for gripping and emptying container-discarding bins (12), which devices may be of the type fitted with protruding, bin gripping and overturning swingable arms (4), the plastics material grinding or triturating devices (6',6'',6''') being individually or jointly provided with a hopper (5) lying over and feeding the said devices (6',6'',6''').

10. The apparatus according to claim 9, characterized in that the conveyor belts (14) are arranged upstream of the plastics material grinding or triturating devices (6',6'',6'''), and are so inclined that the inlet rear end thereof lies at the level of the carrying plane (2) of vehicle (1), and their outlet fore end lies at the level of the top opening of hoppers (5).

11. The apparatus according to claim 9, characterized in that means (4', 15) for lifting the container-discarding bins (12) up to the level of, or over the inlet rear end of the conveyor belts (14), are associated with the said conveyor belts (14).

12. The apparatus according to any of the preceding claims 3 to 11, characterized in that a metal detector (16) for detecting any metallic items, is respectively associated with the discarded container-loading devices (3,14).

13. The apparatus according to any of the preceding claims 3 to 12, characterized in that the discarded container-loading devices (3,14), the devices (18) for previously cutting or breaking discarded big containers, the plastics material grinding or triturating devices (6',6'',6''') and the associated ground or triturated plastics material conveying means (8', 8'', 8''') can be each operated by the engine of the vehicle (1) through a respective, suitable power take-off, or by separate motors (M1, M2', M2'', M2'''), such as electric motors, which are fed from an electric current generator (G).

14. The apparatus according to any one or more of the preceding claims 3 to 13, characterized in that the ground or triturated plastics material conveying means (8', 8'', 8''') supply a packaging device, such as a device for bagging ground or triturated plastics materials, for packaging separately each kind of plastics material.

## Patentansprüche

1. Verfahren zur Rückgewinnung von wiederverwertbarem Abfallmaterial aus weggeworfenen Behältern, die aus wiederverwertbarem Kunststoffmaterial hergestellt sind, die von jeder einer Vielzahl von aufeinanderfolgenden, gesonderten Abfallwegwerfstationen entfernt und fortgetragen werden, welche über die Fläche einer Gemeinde verteilt sind, und die während der Fahrt zu der nächsten gesonderten Abfallwegwerfstation gemahlen oder pulverisiert werden, sowie während die weggeworfenen Behälter zu einem Lagerplatz gefördert werden oder während dieselben zu den Endbenutzern des rückgewonnenen Kunststoffmaterials geschickt oder transportiert sind, gemahlen oder pulverisiert werden, wobei die weggeworfenen großen Behälter, die aus wiederverwertbarem Kunststoffmaterial hergestellt sind, zuvor in Stücke kleiner Größe geschnitten oder gebrochen werden und nachfolgend gemahlen oder pulverisiert werden, während sie überführt oder transportiert werden, so daß sie in sehr kleine Stücke pulverisiert oder gebrochen werden, **dadurch gekennzeichnet**, daß
- die weggeworfenen Behälter, die aus verschiedenen Arten wiederverwertbaren Kunststoffmaterials hergestellt sind, nach der Art des Kunststoffmaterials, aus welchem sie hergestellt werden, nur dann ausgesondert werden, wenn sie in den Stationen weggeworfen werden, aus denen sie entfernt werden, oder nur dann, wenn sie von dort weggefahren werden, wobei das Mahlen oder Pulverisieren des Kunststoffmaterials der weggeworfenen Behälter für jede Art Kunststoffmaterial separat erfolgt, und
- die Kunststoffmaterialien weggeworfener Behälter, die gemahlen oder pulverisiert werden, während sie überführt oder transportiert werden, separat entsprechend der Art des Kunststoffmaterials gelagert werden, aus welchem die Behälter hergestellt sind.

2. Verfahren nach Anspruch 1, dadurch gekennzeichnet, daß die gemahlenen oder pulverisierten Kunststoffmaterialien, die sich Somit in einem pulverisierten oder gebrochenen Zustand befinden, in versiegelte Verpackungen, wie z. B. versiegelte Beutel, verpackt werden, während sie überführt oder transportiert werden.

3. Vorrichtung zur Durchführung des Verfahrens nach Anspruch 1, wobei ein Fahrzeug (1) mit Vorrichtungen (3, 14) eingerichtet ist, um auf diesem die weggeworfenen Behälter aufzuladen, die aus wiederverwertbarem Kunststoffmaterial hergestellt sind, die von den ausgesonderten Abfallwegwerfstationen entfernt werden, sowie mit Vorrichtungen (6) zum Mahlen oder Pulverisieren des Kunststoffmaterials der weggeworfenen Behälter, die von den Ladevorrichtungen (3, 14) für die weggeworfenen Behälter zugeführt werden, wobei die Mahl- oder Pulverisiervorrichtungen (6) das gemahlene oder pulverisierte Kunststoffmaterial in Zwischenspeicherbunker (9) zuführen, dadurch gekennzeichnet, daß
eine Vielzahl von Mahl- oder Pulverisiervorrichtungen (6', 6'', 6''') für Kunststoffmaterial, die dafür vorgesehen, jeweils mit weggeworfenen Behältern beschickt zu werden, die nur aus einer Art von wiederverwertbarem Kunststoffmaterial hergestellt sind, in gegenseitig paralleler Lage angeordnet ist,
- die Auslässe (7', 7'', 7'') der Mahl- oder Pulverisiervorrichtungen (6', 6'', 6''') für Kunststoffmaterial mit separaten Mitteln (8', 8'', 8''') verbunden sind zum Fördern der betreffenden verschiedenen Arten von gemahlenem oder pulverisiertem Kunststoffmaterial weggeworfener Behälter in entsprechende, separate Bunker (9', 9'', 9''') für eine Zwischenlagerung der Kunststoffmaterialien,
- die Ladevorrichtungen (3) für weggeworfene Behälter aus einer Vielzahl von Förderriemen (14) bestehen, die in einer gegenseitig parallelen, koplanaren Lage Seite an Seite angeordnet und der jeweiligen Mahl- oder Pulverisiervorrichtung (6', 6'', 6''') zugeordnet sind, wobei diese Förderriemen (14) durch hochstehende Längstrennwände (314) gegenseitig separiert sind,
- Mittel (17, 18) auf dem Fahrzeug (1) vorgesehen sind für das vorherige Schneiden oder Brechen weggeworfener großer Behälter aus wiederverwertbarem Kunststoffmatrial in Stücke kleiner Größe, welche den Mahl- oder Pulverisiervorrichtungen (6', 6'', 6''') für Kunststoffmaterial zugeführt werden.

4. Vorrichtung nach Anspruch 3, dadurch gekennzeichnet, daß eine Vorrichtung (18) zum Aufbrechen der weggeworfenen großen Behälter aus wiederverwertbarem Kunststoffmaterial in Stücke einer kleinen Größe aufstromig jeder Vorrichtung (6', 6'', 6''') zum Mahlen oder Pulverisieren der weggeworfenen Kunststoffbehälter angeordnet und in Reihe mit dieser betrieben ist.

5. Vorrichtung nach Anspruch 4, dadurch gekennzeichnet, daß die Vorrichtung (18) zum Aufbrechen der weggeworfenen großen Behälter aus wiederverwertbarem Kunststoffmaterial und die entsprechende Vorrichtung (6', 6'', 6''') zum Mahlen oder Pulverisieren der weggeworfenen Kunststoffbehälter gleichzeitig betrieben und separat bzw. gleichzeitig aus ihren eigenen separaten Vorrichtungen (20, 14) für das Beschicken dieser weggeworfenen Behälter in diese hinein beschickt werden.

6. Vorrichtung nach den Ansprüche 4 und 5, dadurch gekennzeichnet, daß die Vorrichtungen (18) zum Aufbrechen der weggeworfenen großen Behälter aus wiederverwertbarem Kunststoffmaterial über Trichtern (5) angeordnet sind zum Beschicken der Vorrichtungen (6', 6''., 6''') zum Mahlen oder Pulverisieren der weggeworfenen Kunststoffbehälter, und die separaten weggeworfenen Behälterbeschickungsvorrichtungen in der Form von Förderriemen (20, 14) sind, die in einer übereinanderliegenden, parallelen Lage angeordnet und vertikal im Abstand entsprechend dem Niveauunterschied angeordnet sind zwischen dem jeweiligen oberen Einlaß der Trichter (19, 5), welche die Aufbrechvorrichtungen (18) und die Mahl- oder Pulverisiervorrichtungen (6', 6'', 6''') beschicken.

7. Vorrichtung nach einem der vorhergehenden Ansprüche 4 bis 6, dadurch gekennzeichnet, daß die Vorrichtungen (18) zum Aufbrechen der weggeworfenen großen Behälter und die Vorrichtungen (6', 6'', 6''') zum Mahlen oder Pulverisieren des Kunststoffmaterials der weggeworfenen Behälter entweder bei laufendem Fahrzeug (1) oder wenn dieses stationär steht, betrieben werden können.

8. Vorrichtung nach Anspruch 3, dadurch gekennzeichnet, daß die Beförderungsebene (2) des Fahrzeuges (1) mit einer Säge (17) versehen ist, vorzugsweise einer Scheibensäge, zum Schneiden großer Behälter aus wiederverwertbarem Kunststoffmaterial in Stücke kleiner Größe, wobei die Säge (17) durch ihren eigenen Motor (M3) betrieben wird.

9. Vorrichtung nach Anspruch 3, dadurch gekennzeichnet, daß das Mittel (3) zum Aufladen der weggeworfenen Behälter, die aus wiederverwertbarem Kunststoffmaterial hergestellt sind, auf das Fahrzeug (1) in der Form von Vorrichtungen vorgesehen sind zum Greifen und Entleeren von Behälterwegwerfbehältern (12), wobei die Vorrichtungen mit hervorragenden, die Behälter greifenden und überdrehenden, schwingbaren Armen (4) eingerichtet sein können, wobei die Mahl- oder Pulverisiervorrichtungen (6', 6'', 6''') für Kunststoffmaterial einzeln oder verbunden mit einem Trichter (5) versehen sind, welcher über den Vorrichtungen (6', 6'', 6''') liegen und diese beschicken.

10. Vorrichtung nach Anspruch 9, dadurch gekennzeichnet, daß die Förderriemen (14) aufstromig von den Mahl- oder Pulverisiervorrichtungen (6', 6'', 6''') für das Kunststoffmaterial angeordnet und so geneigt sind, daß ihr hinteres Einlaßende auf der Höhe der Beförderungsebene (2) des Fahrzeuges (1) liegt und ihr vorderes Auslaßende auf der Höhe der oberen Öffnung der Trichter (5) liegt.

11. Vorrichtung nach Anspruch 9, dadurch gekennzeichnet, daß das Mittel (4', 15) zum Anheben der Behälterwegwerfbehälter (12) auf die Höhe des rückwärtigen Einlaßendes der Förderriemen (14) oder über diese Höhe hinaus den Förderriemen (14) zugeordnet sind.

12. Vorrichtung nach einem der vorhergehenden Ansprüche 3 bis 11, dadurch gekennzeichnet, daß ein Metalldetektor (16) für die Erfassung jeglicher Metallgegenstände jeweils den Ladevorrichtungen (3, 14) für weggeworfene Behälter zugeordnet ist.

13. Vorrichtung nach einem der vorhergehenden Ansprüche 3 bis 12, dadurch gekennzeichnet, daß die Ladevorrichtungen (3, 14) für die weggeworfenen Behälter, die Vorrichtungen (18) für das vorherige Schneiden oder Brechen großer weggeworfener Behälter, die Mahl- oder Pulverisiervorrichtungen (6', 6'', 6''') für das Kunststoffmaterial und die zugeordneten Fördermittel (8', 8'', 8''') für das gemahlene oder pulverisierte Kunststoffmaterial jeweils von dem Motor des Fahrzeuges (1) durch eine geeignete Energieabnahmevorrichtung oder durch separate Motoren (M1, M2',M2'', M2''') betrieben werden können, wie zum Beispiel Elektromotoren, die von einem elektrischen Stromgenerator (G) gespeist werden.

14. Vorrichtung nach einem oder mehreren der vorhergehenden Ansprüche 3 bis 13, dadurch gekennzeichnet, daß die Fördermittel (8', 8'', 8''') für das gemahlene oder pulverisierte Kunststoffmaterial eine Verpackungsvorrichtung beschicken, wie zum Beispiel eine Vorrichtung zum Einsacken von gemahlenen oder pulverisierten Kunststoffmaterialien, für das separate Verpacken jeder Art von Kunststoffmaterial.

## Revendications

1. Méthode pour la récupération de déchets réutilisables de conteneurs en matière plastique recyclable qui sont retirés et sortis d'une série de stations successives de déchets triés disposées dans la zone d'une municipalité et qui sont broyés ou triturés pendant le trajet vers la station de déchets triés suivante et pendant que les conteneurs sont transportés vers un endroit de stockage ou pendant que ceux-ci sont acheminés ou transportés vers les utilisateurs finaux de matière plastique récupérée, les grands conteneurs en matière plastique réutilisable étant au préalable découpés ou concassés en morceaux de petite dimension et ensuite broyés ou triturés pendant leur transfert ou transport, de manière à être pulvérisés ou concassés en très petits morceaux, caractérisée en ce que les conteneurs en diverses matières plastiques réutilisables sont triés selon le type de matière plastique dans laquelle ils sont fabriqués juste lorsqu'ils sont déchargés dans les stations desquelles ils sont retirés ou juste lorsqu'ils sont transportés depuis ces sites, le broyage ou la trituration des matières plastiques des conteneurs étant effectué(e) séparément pour chaque type de matière plastique, les matières plastiques des conteneurs broyés ou triturés pendant leur tranfert ou leur transport sont stockées séparément selon le type de matière plastique dans laquelle les conteneurs sont fabriqués.

2. Méthode selon la revendication 1, caractérisée en ce que les matières plastiques broyées ou triturées étant ainsi dans un état pulvérisé ou écrasé, elles sont emballées pendant leur transfert ou leur transport dans des emballages scellés, tels que des sacs scellés.

3. Appareil destiné à mettre en oeuvre la méthode selon la revendication 1, comprenant un véhicule (1) muni de dispositifs (3, 14) destinés à recevoir en charge les conteneurs en matière plastique réutilisable qui sont retirés des stations de déchets triés et de dispositifs (6) destinés à broyer ou à triturer les matières plastiques des conteneurs provenant des dispositifs de chargement des conteneurs (3, 14), lesdits dispositifs de broyage ou de trituration (6) envoyant les matières plastiques broyées ou triturées dans des bennes de stockage intermédiaires (9), caractérisé en ce que :
- plusieurs dispositifs de broyage ou de trituration des matières plastiques (6', 6'', 6''') destinés à être alimentés chacun en conteneurs d'un seul type de matière plastique réutilisable sont disposés en relation mutuellement parallèle,
- les sorties (7', 7'', 7''') des dispositifs de broyage ou de trituration de matières plastiques (6', 6'', 6''') sont reliées à des moyens séparés (8', 8'', 8''') destinés à transporter les différents types respectifs de matières plastiques broyées ou triturées de conteneurs dans des bennes séparées associées (9', 9'', 9''') pour un stockage intermédiaire desdites matières plastiques,
- les dispositifs de chargement de conteneurs consistent en plusieurs courroies de transport (14) disposées en une relation coplanaire côte à côte mutuellement parallèle et associées chacune à un dispositif de broyage ou de trituration de matières plastiques (6', 6'', 6'''), lesdites courroies de transport (14) étant mutuellement séparées par des séparations longitudinales droites (314),
- des moyens (17, 18) sont fournis sur le véhicule (1) pour découper ou concasser au préalable les gros conteneurs en matière platique réutilisable en morceaux de petite dimension qui sont envoyés vers les dispositifs de broyage ou de trituration de matières plastiques (6', 6'', 6''').

4. Appareil selon la revendication 3, caractérisé en ce qu'un dispositif (18) destiné à concasser les gros conteneurs en matière plastique réutilisable en morceaux de petite dimension est disposé en amont de chaque dispositif (6', 6'', 6''') destiné à broyer ou à triturer les conteneurs en matière plastique et est actionné en série avec ceux-ci.

5. Appareil selon la revendication 4, caractérisé en ce que le dispositif (18) destiné à concasser les gros conteneurs en matière plastique réutilisable et le dispositif (6', 6'', 6''') respectif destiné à broyer ou à triturer les conteneurs en matière plastique sont actionnés simultanément et sont séparément et simultanément alimentés respectivement par leurs propres dispositifs séparés (20, 14) destinés à envoyer les conteneurs dans ceux-ci.

6. Appareil selon les revendications 4 et 5, caractérisé en ce que les dispositifs (18) destinés à concasser les gros conteneurs en matière plastique réutilisable sont disposés au-dessus de trémies (5) alimentant les dispositifs (6', 6'', 6''') destinés à broyer ou à triturer les conteneurs en matière plastique, et les dispositifs d'envoi des conteneurs séparés ont la forme de courroies de transport (20, 14) qui sont disposées en relation de chevauchement parallèle et sont espacées verticalement selon la différence de niveau entre l'entrée supérieure des trémies (19, 5) alimentant respectivement lesdits dispositifs de concassage (18) et lesdits dispositifs de broyage ou de trituration (6', 6'', 6''').

7. Appareil selon l'une des revendications précédentes 4 à 6, caractérisé en ce que les dispositifs (18) destinés à concasser les gros conteneurs et les dispositifs (6', 6'', 6''') destinés à broyer ou à triturer les matières plastiques des conteneurs peuvent être actionnés lorsque le véhicule (1) est en mouvement ou à l'arrêt.

8. Appareil selon la revendication 3, caractérisé en ce que le plan de transport (2) du véhicule (1) comprend une scie (17), de préférence une scie circulaire, destinée à couper les gros conteneurs en matière plastique réutilisable en morceaux de petite dimension, ladite scie (17) étant actionnée par son propre moteur (M3).

9. Appareil selon la revendication 3, caractérisé en ce que les moyens (3) destinés à charger sur le véhicule (1) les conteneurs en matière plastique réutilisable ont la forme de dispositifs destinés à saisir et à vider les bennes remplies de conteneurs (12), lesdits dispositifs pouvant être du type muni de bras (4) oscillants saisissant et renversant la benne faisant saillie , les dispositifs de broyage ou de trituration de matières plastiques (6', 6'', 6''') étant individuellement ou conjointement munis d'une trémie (5) reposant par-dessus et alimentant lesdits dispositifs (6', 6'', 6''').

10. Appareil selon la revendication 9, caractérisé en ce que les courroies de transport (14) sont disposées en amont des dispositifs de broyage ou de trituration de matières plastiques (6', 6'', 6''') et sont inclinés de manière à ce que l'extrémité arrière d'entrée de ceux-ci soit à niveau avec le plan de transport (2) du véhicule (1) et leurs extrémités avant de sortie au niveau de l'ouverture supérieure des trémies (5).

11. Appareil selon la revendication 9, caractérisé en ce que les moyens (4', 15) destinés à soulever les bennes de conteneurs (12) au niveau de ou par-dessus l'extrémité arrière d'entrée des courroies de transport (14) sont associés auxdites courroies de transport (14).

12. Appareil selon l'une des revendications 3 à 11, caractérisé en ce qu'un détecteur de métal (16) destiné à détecter tout article métallique est respectivement associé aux dispositifs de chargement des conteneurs (3, 14).

13. Appareil selon l'une des revendications 3 à 12, caractérisé en ce que les dispositifs de chargement des conteneurs (3, 14), les dispositifs (18) destinés à découper ou à concasser au préalable les gros conteneurs, les dispositifs de broyage ou de trituration de matières plastiques (6', 6'', 6''') et les moyens de transport des matières plastiques broyées ou triturées (8', 8'', 8''') peuvent être actionnés chacun par le moteur du véhicule (1) au moyen d'une prise de force de puissance adaptée respective ou par des moteurs séparés (M1, M2', M2'', M2'''), tels que des moteurs électriques qui sont alimentés à partir d'un générateur de courant électrique (G).

14. Appareil selon l'une ou plusieurs revendications précédentes 3 à 13, caractérisé en ce que les moyens de transport des matières plastiques broyées ou triturées (8', 8'', 8''') alimentent un dispositif d'emballage, tel qu'un dispositif destinés à ensacher des matières plastiques broyées ou triturées, afin d'emballer séparément chaque type de matières plastiques.
